# EUROPEAN PATENT APPLICATION

(11) **EP 4 704 488 A1**
(43) Date of publication of application: **04.03.2026**
(21) Application number: 23934349.4
(22) Date of filing: 23.04.2023
(51) Int. Cl.: H04W 76/15

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/090152
(87) International publication number: WO 2024/221143

(57) **Abstract**

The embodiments of the present disclosure relate to the technical field of mobile communications. Provided are a communication method, an electronic device, and a storage medium. The communication method is applied to a station (STA). The method comprises: establishing second connections to a second AP by means of a first AP, wherein each second connection is in an inactive state, an STA establishes a first connection to the first AP, the first connection is in an active state, and the first AP and the second AP belong to different physical entities. The embodiments of the present disclosure provide a mechanism for supporting an STA to switch between a plurality of AP devices.

## Description

### TECHNICAL FIELD

The embodiments of the present disclosure relate to the field of mobile communication technologies. Specifically, the embodiments of the present disclosure relate to a communication method, an electronic device, and a storage medium.

### BACKGROUND

Currently, what Wi-Fi technology researches includes, for example, Ultra High Reliability (UHR), with the goal of improving reliability of Wireless Local Area Network (WLAN) connectivity, reducing latency, increasing manageability, increasing throughput at different signal-to-noise ratio (SNR) levels, and reducing device-level power consumption, etc.

In UHR, low-latency service transmission mechanisms will be further enhanced, and multi-link scenarios are supported. To ensure low-latency service transmission, Station (STA) may transition between a plurality of Access Point (AP) devices. Therefore, there is a need to provide a mechanism for supporting the STA transitioning between the plurality of AP devices, to meet the transmission requirements of UHR.

### SUMMARY

The embodiments of the present disclosure provide a communication method, an electronic device, and a storage medium to provide a mechanism for supporting STA transitioning between a plurality of AP devices to meet the transmission requirements of UHR.

In an aspect, an embodiment of the present disclosure provides a communication method, applied to a station (STA), the method including:
establishing a second link with a second AP through a first AP, where each second link is in an inactive state;
where the STA establishes a first link with the first AP, the first link is in an activated state, and the first AP and the second AP belong to different physical entities.

In another aspect, an embodiment of the present disclosure further provides a communication method, applied to a first access point device (AP), the method including:
determining a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
sending first wireless frame.

In another aspect, an embodiment of the present disclosure further provides an electronic device, the electronic device is a station (STA), and the electronic device includes:
a link establishing module, configured to establish a second link with a second AP through a first AP, where each second link is in an inactive state;
where the STA establishes a first link with the first AP, the first link is in an activated state, and the first AP and the second AP belong to different physical entities.

In another aspect, an embodiment of the present disclosure further provides an electronic device, the electronic device is a first access point device (AP), and the electronic device includes:
a determining module configured to determine a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
a sending module configured to send the first wireless frame.

An embodiment of the present disclosure further provides an electronic device, including a memory, a processor, and a computer program stored in the memory and executable on the processor, and when the processor executes the program, the method described in one or more of the embodiments of the present disclosure is implemented.

An embodiment of the present disclosure further provides a computer-readable storage medium having a computer program stored thereon, and when the computer program is executed by a processor, the method described in one or more of the embodiments of the present disclosure is implemented.

In the embodiments of the present disclosure, in the process of establishing a first link with a first AP, or after the first link is established, the STA establishes a second link with a second AP through the first AP. Thus, when the communication conditions of the STA and the first AP associated with the STA change, it can transition to the second AP for communication, so that the data transmission is not interrupted, to meet the transmission rate requirements of UHR and the latency requirements of low-latency services. The embodiments of the present disclosure provide a mechanism to support STA transitioning between a plurality of AP devices.

### BRIEF DESCRIPTION OF THE DRAWINGS

In order to more clearly illustrate the technical solutions of the embodiments of the present disclosure, the drawings used in the description of the embodiments of the present disclosure will be briefly introduced below. Obviously, the drawings described below are only some embodiments of the present disclosure, and for those of ordinary skill in the art, other drawings can be obtained based on these drawings without any creative work.
FIG. 1 is a schematic diagram of a first example of an embodiment of the present disclosure;
FIG. 2 is a first flowchart of a communication method provided in an embodiment of the present disclosure;
FIG. 3 is a second flowchart of a communication method provided in an embodiment of the present disclosure;
FIG. 4 is a first structural schematic diagram of an electronic device provided in an embodiment of the present disclosure;
FIG. 5 is a second structural schematic diagram of an electronic device provided in an embodiment of the present disclosure; and
FIG. 6 is a third structural schematic diagram of an electronic device provided in an embodiment of the present disclosure.

### DETAILED DESCRIPTION

Illustrative embodiments will be described in detail herein, examples of which are illustrated in the accompanying drawings. In the following description, unless otherwise indicated, like numbers in different figures represent the same or similar elements. The embodiments described in the following illustrative embodiments are not intended to represent all possible embodiments consistent with the present disclosure. Rather, they are merely examples of apparatus and methods consistent with certain aspects of the present disclosure, as detailed in the appended claims.

In the embodiments of the present disclosure, the terms used are only for the purpose of describing specific embodiments and are not intended to limit the present disclosure. The singular forms "a", "said" and "the" used in the present disclosure and the appended claims are also intended to include plural forms, unless the context clearly indicates otherwise. It should also be understood that the term "and/or" used herein refers to and includes any or all possible combinations of one or more associated listed items. For example, A and/or B can mean: A exists alone, A and B exist at the same time, and B exists alone. The character "/" generally indicates that the associated objects before and after this character are in an "or" relationship. The term "a plurality of" refers to two or more. In view of this, "a plurality of" can also be understood as "at least two" in the embodiments of the present disclosure.

It should be understood that although the terms first, second, third, etc. may be used in this disclosure to describe various information, such information should not be limited to these terms. These terms are only used to distinguish information of the same type from each other. For example, without departing from the scope of the present disclosure, the first information may also be referred to as the second information, and similarly, the second information may also be referred to as the first information. Depending on the context, for example, the word "if" as used herein may be interpreted as "at the time of" or "when" or "in response to determining".

The technical solutions in the embodiments of the present disclosure will be clearly and completely described below with reference to the accompanying drawings in the embodiments of the present disclosure. Obviously, the described embodiments are only a part of the embodiments of the present disclosure, and are not all of the embodiments. All other embodiments obtained by a person of ordinary skill in the art based on the embodiments of the present disclosure without creative efforts shall fall within the protection scope of the present disclosure.

The embodiments of the present disclosure provide a communication method, an electronic device, and a storage medium for providing a mechanism to support STA transitioning between a plurality of AP devices to meet the transmission requirements of UHR. The method and device are based on the same patent application concept. Since the method and device solve similar problems, the implementations of the device and method can refer to each other, and the repeated parts will not be omitted.

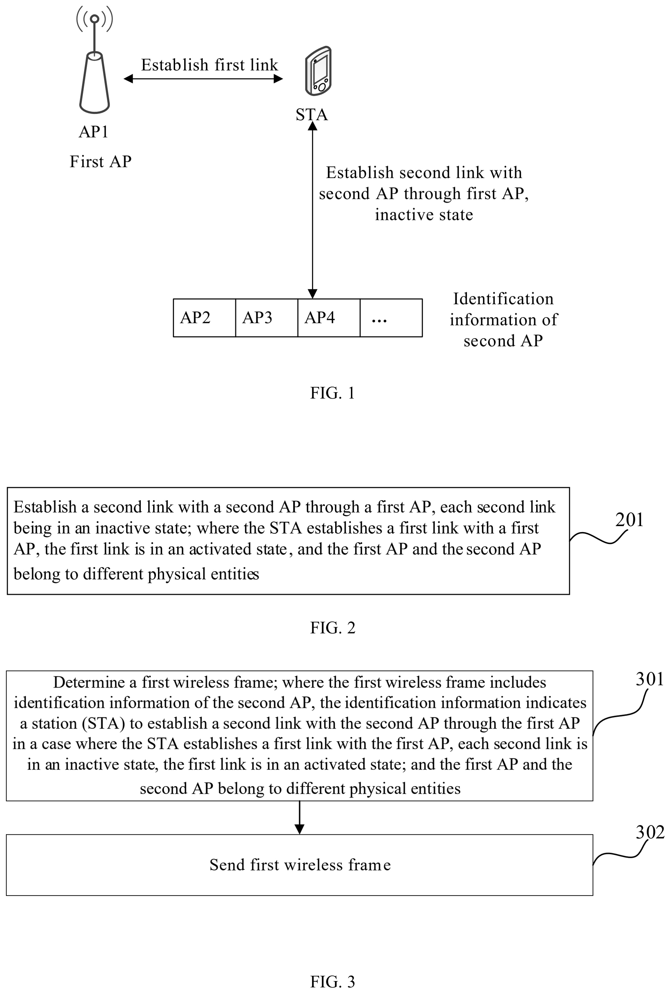

As a first example, refer to FIG. 1, which shows an example of an application scenario of a communication method provided by an embodiment of the present disclosure.

As shown in FIG. 1, AP1 is the first AP; AP2, AP3, and AP4 are second APs. The first AP can be a broadcast AP. Optionally, the first AP can be affiliated with an AP MLD. It is understood that the AP MLD supports multi-link communication. The second AP can include one or more APs (the number of the second APs in FIG. 1 is only an example and does not constitute a limitation). The second AP can be a single-link device that does not support multi-link communication, or can be an MLD device that supports multi-link communication. The second AP and the first AP belong to different physical entities. Optionally, the second AP can be within a certain location range or coverage area from the first AP, allowing the first AP to obtain parameter information of the second AP (e.g., identification information of the second AP).

The STA establishes second links with the second APs through the first AP, and each of the second links is in an inactive state; the STA establishes a first link with the first AP, and the first link is in an activated state.

Optionally, the STA may establish the second link with the second AP through the first AP during the process of establishing the first link with the first AP, or after establishing the first link.

If the second AP includes a plurality of APs, the STA can establish links with the plurality of second APs, and thus there are a plurality of second links. In this case, each of the second links is in an inactive state.

Optionally, upon receiving a link establishment request from the first AP, the STA may establish links with the first AP and the second AP(s), respectively. The link establishment request may include identification information for the first and second APs. The established first link with the first AP is in an activated state, or is in an activated state after the first AP establishes a TID-to-Link mapping; while the established second link(s) with the second AP(s) is in an inactive state. Optionally, after a transition occurs (the STA transitions from the first AP to the second AP), the second link between the STA and one of the second APs is in an activated state, while the first link is in an inactive state.

In addition, a TID-to-Link mapping for the second link can be established through the first AP; that is, a service-to-link mapping between the second AP and the STA can be completed by the first AP, so that the service data of the TID-to-Link mapping can be quickly transmitted after the STA transitions to the second AP subsequently.

As an example, the STA may receive a first wireless frame broadcast by the first AP to obtain the identification information of the second AP carried in the first wireless frame, thereby establishing the second link with the second AP. Optionally, the identification information of the second AP may be obtained by the first AP from a beacon frame, a probe response frame, an association response frame, etc. broadcast by the second AP. The first wireless frame includes at least one of a beacon frame, a probe response frame, an association response frame, or a reassociation response frame.

Optionally, the identification information may be carried in a first information element in the first wireless frame.

The first information element may be an existing information element. For example, the first information element may be a multi-link information element. The format of the multi-link information element is shown in Table 1 below:

**Table 1:**

| | | | | | | |
|---|---|---|---|---|---|---|
| Information content | Element ID | Length | Element ID Extension | Multi - Link Control | Common info | Link info |

In addition, the first information element may also be a newly defined information element. Optionally, the format of the newly defined element may be similar to that of the multi-link information element. Optionally, in the case where the first information element is the newly defined information element, the first information element and the multi-link information element may be carried together in the first wireless frame.

Optionally, in a case where the second AP does not support multi-link communication, the identification information may include MAC address information of the second AP, or device identification information allocated by the first AP to the second AP.

In a case where the second AP is affiliated with an AP MLD (it can be understood that the AP MLD supports multi-link communication), the identification information may include group identification information of a group to which the second AP belongs, and device identification information of the second AP in the group.

As an example, the format of the identification information is shown in Table 2 below:

**Table 2:**

| | | |
|---|---|---|
| Information content | Group identification information | Device identification information |
| | (Group set ID) | (Group ID) |

Optionally, the group identification information of the second AP may include the MAC address information of the AP MLD to which the second AP belongs; that is, the MAC address information of the AP MLD is used as the group identification information of the second AP, and the identification information further includes the device identification information of the second AP within the AP MLD.

Optionally, the first information element may also include transition delay information for the STA transitioning from the first AP to the second AP.

The transition delay information is used to identify the delay for the STA transitioning from the first AP to the second AP. As an example, the transition delay information can be defined as a transition delay similar to that in an Enhanced Multi-Link Single Radio (EMLSR) operating mode and an Enhanced Multi-Link Multi-Radio (EMLMR) operating mode. For example, the transition delay information can be identified through one or more bits. Optionally, "0" can identify a transition delay of 0 µs (microseconds); "1" can identify a transition delay of 32 µs; "2" can identify a transition delay of 64 µs, and so on. In this way, the second AP can perform operations such as data transmission and time synchronization with the STA based on the transition delay information.

Optionally, after establishing the second link, the STA may transition to the second AP for communication based on communication quality with the first AP, for example, if the communication quality does not meet a preset communication quality requirement. Optionally, the communication quality may be determined according to parameters such as a signal-noise rate (SNR) or a packet error rate (PER).

As an example, the STA may request to transition from the first AP to the second AP by sending a second wireless frame to the second AP. For example, the second wireless frame may include a transition notification frame. When the STA receives an acknowledgement frame fed back by the second AP with respect to the second wireless frame, it can transition from the first AP to the second AP.

In the embodiments of the present disclosure, while establishing the first link with the first AP, or after establishing the first link, the STA establishes the second link(s) with the second AP(s) through the first AP. Thus, when the communication conditions between the STA and the first AP associated with it change, the STA can transition to the second AP for communication, ensuring that the data transmission is not interrupted, so as to meet the transmission rate requirements of UHR and the latency requirements of low-latency services. The embodiments of the present disclosure provide a mechanism to support the STA transitioning between a plurality of AP devices.

As shown in FIG. 2, an embodiment of the present disclosure provides a communication method. Optionally, the method may be applied to a station (STA), and the method may include the following steps:
Step 201, establishing a second link with a second AP through a first AP, where each second link is in an inactive state;
where the STA establishes a first link with a first AP, the first link is in an activated state, and the first AP and the second AP belong to different physical entities.

In UHR, the STA may be transition between a plurality of AP devices or AP MLDs. For example, if the communication quality between the STA and its associated AP is poor, it can seamlessly transition to another AP for communication, ensuring uninterrupted data transmission. Therefore, it needs to provide a mechanism to support the STA transitioning between a plurality of AP devices so as to meet the transmission requirements of UHR.

To achieve seamless data connection, in the embodiments of the present disclosure, the STA can establish a second link with a second AP through a first AP, allowing the STA to transition to the second AP for communication. It should be noted that the first link established between the STA and the first AP is in an activated state, while the second link is in an inactive state.

In practical scenarios, the first AP may be a broadcasting AP. Optionally, the first AP may be affiliated with an AP MLD. It is understandable that the AP MLD supports multi-link communication.

The first link includes a link between the STA and a first AP, and the first link is in an activated state.

The second AP may include one or more APs. The second AP may be a single-link device that does not support multi-link communication, or an MLD device that supports multi-link communication. The second AP and the first AP belong to different physical entities. Optionally, the second AP may be within a certain location range or coverage area from the first AP, allowing the first AP to obtain parameter information of the second AP (e.g., identification information of the second AP).

The second link includes a link between the STA and the second AP via the first AP, and the second link is in an inactive state. If there are a plurality of second APs, the STA can establish links with the plurality of second APs, and thus there are a plurality of second links. In this case, each of the second links is in the inactive state.

As an example, in the case where the STA receives a link establishment request from the first AP, the STA may establish links with the first AP and the second AP, respectively. The link establishment request may include identification information of the first and second APs. The established first link with the first AP is in an activated state, or is in the activated state after the first AP establishes a TID-to-Link mapping, while the established second link with the second AP is in an inactive state. Furthermore, after a transition occurs (the STA transitions from the first AP to the second AP), the second link between the STA and one of the second APs is in the activated state, while the first link is in the inactive state.

Optionally, the second link may be established during the process of establishing the first link. In addition, the second link may be established after the first link is established.

In the embodiments of the present disclosure, while establishing the first link with the first AP, or after establishing the first link, the STA establishes the second link(s) with the second AP(s) through the first AP. Thus, when the communication conditions between the STA and the first AP associated with the STA change, the STA can transition to the second AP for communication, ensuring uninterrupted data transmission and meeting the transmission rate requirements of UHR and the latency requirements of low-latency services. The embodiments of the present disclosure provide a mechanism to support the STA transitioning between a plurality of AP devices.

An embodiment of the present disclosure provides a communication method. Optionally, the method may be applied to a station (STA), and the method may include the following steps:
establishing a second link with a second AP through a first AP, each second link being in an inactive state;
where the STA establishes a first link with the first AP, the first link is in an activated state, and the first AP and the second AP belong to different physical entities.

Optionally, establishing the second link with the second AP through the first AP includes:
receiving a first wireless frame sent by the first AP; where the first wireless frame includes identification information of the second AP.

As an example, the STA may establish the second link with the second AP through the first wireless frame broadcast by the first AP. The first wireless frame may carry identification information of the second AP to request the STA to establish a link with the second AP.

Optionally, the identification information of the second AP can be obtained by the first AP from a beacon frame, a probe response frame, an association response frame, etc. broadcast by the second AP.

Optionally, in an embodiment of the present disclosure, the first wireless frame includes at least one of the following:
a Beacon frame, a Probe Response frame, an Association Response frame, or a Reassociation Response frame. The STA can establish the second link with the second AP through the first wireless frame broadcast by the first AP. In this way, when the communication conditions between the STA and the first AP associated with the STA change, the STA can transition to the second AP for communication, ensuring uninterrupted data transmission, and meeting the transmission rate requirements of UHR and the latency requirements of low-latency services.

Optionally, in an embodiment of the present disclosure, the first wireless frame includes a first information element, and the identification information is carried in the first information element.

As an example, the first information element may be a multi-link information element, and the format of the multi-link information element is as shown in Table 1 above.

As another example, the first information element may be a newly defined element. Optionally, the format of the newly defined element may be similar to that of the multi-link information element. Optionally, in a case where the first information element is the newly defined element, the first information element and the multi-link information element may be carried together in the first wireless frame.

Optionally, in an embodiment of the present disclosure, the first information element further includes:
transition delay information for the STA transitioning from the first AP to the second AP.

The transition delay information is used to identify a delay for the STA transitioning from the first AP to the second AP. As an example, the transition delay information can be defined as a transition delay similar to that in an Enhanced Multi-Link Single-Radio (EMLSR) operating mode and an Enhanced Multi-Link Multi-Radio (EMLMR) operating mode. For example, the transition delay information can be identified using one or more bits. Optionally, "0" can identify a transition delay of 0 µs (microseconds); "1" can identify a transition delay of 32 µs; "2" can identify a transition delay of 64 µs, and so on. In this way, the second AP can perform operations such as data transmission and time synchronization with the STA based on the transition delay information.

Optionally, in an embodiment of the present disclosure, if the second AP does not support multi-link communication (the first AP is affiliated with an AP MLD, and the AP MLD supports multi-link communication), the identification information includes MAC address information of the second AP, or device identification information assigned by the first AP to the second AP.

If the second AP is affiliated with an AP MLD, it is understood that the AP MLD supports multi-link communication (the first AP may also be affiliated with an AP MLD), and the identification information includes:
group identification information of a group to which the second AP belongs, and device identification information of the second AP in the group.

Optionally, the second AP may include one or more APs; the group identification information is used to identify the group to which the second AP(s) belongs, and the device identification information is used to identify the identity of the second AP in the group to which it belongs. As an example, the format of the identification information is as shown in Table 2 above.

Optionally, in an embodiment of the present disclosure, the group identification information of the second AP includes MAC address information of an AP MLD to which the second AP belongs; that is, the MAC address information of the AP MLD is used as the group identification information of the second AP, and the identification information further includes the device identification information of the second AP within the AP MLD.

Optionally, in an embodiment of the present disclosure, after receiving the first wireless frame sent by the first AP, the method further includes:
sending a second wireless frame, where the second wireless frame requests transition from the first AP to the second AP.

Optionally, in an embodiment of the present disclosure, the second wireless frame may include a transition notification frame.

Optionally, the second wireless frame may carry the identification information of the second AP. Optionally, the identification information of the second AP may be group identification information of a group to which the second AP belongs (group set ID), and the device identification information of the second AP in the group (group ID). Optionally, the second wireless frame may further carry a link identifier (Link ID) of the established link between the STA and the second AP.

As an example, after receiving the first wireless frame, the STA may transition to the second AP for communication based on the communication quality with the first AP, for example, if the communication quality does not meet a preset communication quality requirement. Optionally, the communication quality may be determined according to parameters such as a signal- noise rate (SNR) or a packet error rate (PER).

Optionally, in an embodiment of the present disclosure, after sending the second wireless frame, the method further includes:
upon receiving an acknowledgement frame fed back by the second AP with respect to the second wireless frame, transitioning from the first AP to the second AP.

As an example, upon receiving the acknowledgement frame fed back by the second AP with respect to the second wireless frame, the STA may transition from the first AP to the second AP.

An embodiment of the present disclosure provides a communication method. Optionally, the method may be applied to a station (STA), and the method may include the following steps:
establishing a second link with a second AP through a first AP, each second link being in an inactive state;
where the STA establishes a first link with the first AP, the first link is in an activated state, and the first AP and the second AP belong to different physical entities.

Optionally, a TID-to-Link mapping for the second link is established through the first AP; that is, a service-to-link mapping between another AP (i.e., the second AP) and the STA can be completed by the first AP, so that the service data of the TID-to-Link mapping can be quickly transmitted after the STA transitions to the other AP subsequently.

In an embodiment of the present disclosure, while establishing the first link with the first AP, or after establishing the first link, the STA establishes the second link(s) with the second AP(s) through the first AP. Thus, when the communication conditions between the STA and the first AP associated with the STA change, the STA can transition to the second AP for communication, ensuring uninterrupted data transmission and meeting the transmission rate requirements of UHR and the latency requirements of low-latency services. The embodiments of the present disclosure provide a mechanism to support the STA transitioning between a plurality of AP devices.

An embodiment of the present disclosure provides a communication method. Optionally, the method may be applied to a station (STA), and the method may include the following steps:
establishing a second link with a second AP through a first AP, each second link being in an inactive state;
where the STA establishes a first link with the first AP, the first link is in an activated state, and the first AP and the second AP belong to different physical entities.

Optionally, establishing the second link with the second AP through the first AP includes:
receiving a first wireless frame sent by the first AP; where the first wireless frame includes identification information of the second AP.

Optionally, the first wireless frame includes a first information element, and the identification information is carried in the first information element.

Optionally, the second AP does not support multi-link communication, and the identification information includes MAC address information of the second AP or device identification information allocated by the first AP to the second AP;
or
the second AP is affiliated with an AP MLD, and the identification information includes group identification information of a group to which the second AP belongs, and device identification information of the second AP in the group.

Optionally, the group identification information of the second AP includes MAC address information of the AP MLD to which the second AP belongs.

Optionally, a TID-to-Link mapping for the second link is established through the first AP.

Optionally, the first information element further includes:
transition delay information for the STA transitioning from the first AP to the second AP.

Optionally, after receiving the first wireless frame sent by the first AP, the method further includes:
sending a second wireless frame, where the second wireless frame requests a transition from the first AP to the second AP.

Optionally, after sending the second wireless frame, the method further includes:
upon receiving a acknowledgement frame fed back by the second AP with respect to the second wireless frame, transitioning from the first AP to the second AP.

Optionally, the second wireless frame includes a transition notification frame.

In the embodiments of the present disclosure, while establishing the first link with the first AP, or after establishing the first link, the STA establishes the second link(s) with the second AP(s) through the first AP. Thus, when the communication conditions between the STA and the first AP associated with the STA change, the STA can transition to the second AP for communication, ensuring uninterrupted data transmission and meeting the transmission rate requirements of UHR and the latency requirements of low-latency services. The embodiments of the present disclosure provide a mechanism to support the STA transitioning between a plurality of AP devices.

Referring to FIG. 3, an embodiment of the present disclosure provides a communication method, which may be applied to a first AP, and the method may include the following steps:
Step 301, determining a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
Step 302, sending the first wireless frame.

For the WLAN architecture applied in the communication method provided in the embodiment of the present disclosure, please refer to the aforementioned first example and it will not be repeated here.

In UHR, the STA may transition between a plurality of AP devices or AP MLDs. For example, if the communication quality between a STA and its associated AP is poor, it can seamlessly transition to another AP for communication, ensuring uninterrupted data transmission. Therefore, it needs to provide a mechanism to support the STA transitioning between a plurality of AP devices so as to meet the transmission requirements of UHR.

To achieve seamless data connection, in the embodiments of the present disclosure, a STA can establish a second link with a second AP through a first AP, allowing the STA to transition to the second AP for communication. It should be noted that the first link established between the STA and the first AP is in an activated state, while the second link is in an inactive state.

In practical scenarios, the first AP may be a broadcasting AP. Optionally, the first AP may be affiliated with an AP MLD. It is understandable that the AP MLD supports multi-link communication.

The first link includes a link between the STA and the first AP (the AP with which the STA is currently in communication connection). It can be understood that the first link is in an activated state.

The second AP may include one or more APs. The second AP may be a single-link device that does not support multi-link communication, or a multi-link device (MLD) that supports multi-link communication. The second AP and the first AP belong to different physical entities. Optionally, the second AP may be within a certain location range or coverage area from the first AP, allowing the first AP to obtain parameter information of the second AP (e.g., identification information of the second AP).

The second link includes a link between the STA and the second AP via the first AP, and the second link is in an inactive state. If there are a plurality of second APs, the STA can establish links with the plurality of second APs, and thus there are a plurality of second links. In this case, each of the second links is in the inactive state.

As an example, in the case where the STA receives a link establishment request from the first AP, the STA may establish links with the first AP and the second AP, respectively. The link establishment request may include identification information of the first and second APs. The established first link with the first AP is in an activated state, or is in the activated state after the first AP establishes a TID-to-Link mapping, while the established second link with the second AP is in an inactive state. Furthermore, after a transition occurs (the STA transitions from the first AP to the second AP), the second link between the STA and one of the second APs is in the activated state, while the first link is in the inactive state.

Optionally, the second link may be established during the process of establishing the first link. In addition, the second link may be established after the first link is established.

In the embodiment of the present disclosure, the first AP sends a first wireless frame to the STA, where the first wireless frame includes identification information of the second AP, to indicate the STA to establish a second link(s) with the second AP(s) through the first AP in a case where the STA establishes a first link with the first AP. In this way, when the communication conditions between the STA and the first AP associated with the STA change subsequently, the STA can transition to one second AP for communication, so that data transmission is uninterrupted, thereby meeting the UHR requirements for transmission rate and latency requirements of low-latency services.

Optionally, in an embodiment of the present disclosure, the first wireless frame includes at least one of the following:
a Beacon frame, a Probe Response frame, an Association Response frame, or a Reassociation Response frame.

An embodiment of the present disclosure provides a communication method, which may be applied to a first AP and may include the following steps:
determining a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and
sending the first wireless frame.

The first wireless frame includes a first information element, and the identification information is carried in the first information element.

As an example, the first information element may be a multi-link information element; the format of the multi-link information element is as shown in Table 1 above and will not be repeated here.

As another example, the first information element may be a newly defined element. Optionally, the format of the newly defined element may be similar to that of the multi-link information element. Optionally, in a case where the first information element is the newly defined element, the first information element and the multi-link information element may be carried together in the first wireless frame.

Optionally, in an embodiment of the present disclosure, if the second AP does not support multi-link communication (the first AP is affiliated with an AP MLD, and the AP MLD supports multi-link communication), the identification information includes MAC address information of the second AP, or device identification information assigned by the first AP to the second AP.

If the second AP is affiliated with an AP MLD, it is understood that the AP MLD supports multi-link communication (the first AP may also be affiliated with AP MLD), and the identification information includes:
group identification information of a group to which the second AP belongs, and device identification information of the second AP in the group.

Optionally, the second AP may include one or more APs; the group identification information is used to identify the group to which the second AP(s) belongs, and the device identification information is used to identify the identity of the second AP in the group to which it belongs. As an example, the format of the identification information is as shown in Table 2 above.

Optionally, in an embodiment of the present disclosure, the group identification information of the second AP includes MAC address information of an AP MLD to which the second AP belongs; that is, the MAC address information of the AP MLD is used as the group identification information of the second AP, and the identification information further includes the device identification information of the second AP within the AP MLD.

Optionally, in an embodiment of the present disclosure, the first information element further includes:
transition delay information for the STA transitioning from the first AP to the second AP.

The transition delay information is used to identify a delay for the STA transitioning from the first AP to the second AP. As an example, the transition delay information can be defined as a transition delay similar to that in an Enhanced Multi-Link Single-Radio (EMLSR) operating mode and an Enhanced Multi-Link Multi-Radio (EMLMR) operating mode. For example, the transition delay information can be identified using one or more bits. Optionally, "0" can identify a transition delay of 0 µs (microseconds); "1" can identify a transition delay of 32 µs; "2" can identify a transition delay of 64 µs, and so on. In this way, the second AP can perform operations such as data transmission and time synchronization with the STA based on the transition delay information.

An embodiment of the present disclosure provides a communication method, which may be applied to a first AP and may include the following steps:
determining a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
sending first wireless frame.

Optionally, a TID-to-Link mapping for the second link is established through the first AP; that is, a service-to-link mapping between another AP (i.e., the second AP) and the STA can be completed by the first AP, so that the service data of the TID-to-Link mapping can be quickly transmitted after the STA transitions to the other AP subsequently.

In the embodiment of the present disclosure, the first AP sends a first wireless frame to the STA, where the first wireless frame includes identification information of the second AP, to indicate the STA to establish a second link(s) with the second AP(s) through the first AP in a case where the STA establishes a first link with the first AP. In this way, when the communication conditions between the STA and the first AP associated with the STA change subsequently, the STA can transition to one second AP for communication, so that data transmission is uninterrupted, thereby meeting the UHR requirements for transmission rate and the latency requirements of low-latency services.

An embodiment of the present disclosure provides a communication method, which can be applied to a first AP and may include the following steps:
determining a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
sending first wireless frame.

Optionally, the first wireless frame includes a first information element, and the identification information is carried in the first information element.

Optionally, the second AP does not support multi-link communication, and the identification information includes: MAC address information of the second AP or device identification information allocated by the first AP to the second AP;
**or**
the second AP is affiliated with an AP MLD, and the identification information includes:
group identification information of a group to which the second AP belongs, and device identification information of the second AP in the group.

Optionally, the group identification information of the second AP includes MAC address information of the AP MLD to which the second AP belongs.

Optionally, a TID-to-Link mapping for the second link is established through the first AP.

Optionally, the first information element further includes:
transition delay information for the STA transitioning from the first AP to the second AP.

In the embodiments of the present disclosure, the first AP sends a first wireless frame to the STA, where the first wireless frame includes identification information of the second AP, to indicate the STA to establish a second link(s) with the second AP(s) through the first AP in a case where the STA establishes a first link with the first AP. In this way, when the communication conditions between the STA and the first AP associated with the STA change subsequently, the STA can transition to one second AP for communication, so that data transmission is uninterrupted, thereby meeting the UHR requirements for transmission rate and the latency requirements of low-latency services.

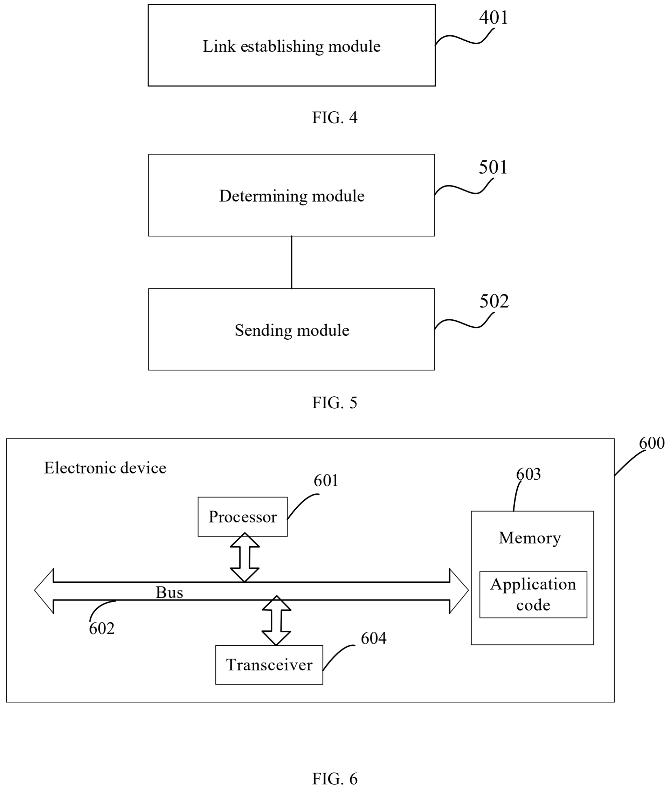

Referring to FIG. 4, based on the same principle as the methods provided in the embodiments of the present disclosure, the embodiments of the present disclosure further provide an electronic device, the electronic device being a station (STA), and the electronic device including:
a link establishing module 401, configured to establish a second link with a second AP through a first AP, where each second link is in an inactive state;
where the STA establishes a first link with the first AP, the first link is in an activated state, and the first AP and the second AP belong to different physical entities.

An embodiment of the present disclosure also provides a power saving information negotiation device, which is applied to a station (STA). The device includes:
a link establishing module, configured to establish a second link with a second AP through the first AP, where each second link is in an inactive state;
where the STA establishes a first link with the first AP, the first link is in an activated state, and the first AP and the second AP belong to different physical entities.

The device also includes other modules of the electronic device in the aforementioned embodiments, which will not be described in detail here.

Referring to FIG. 5, based on the same principle as the methods provided in the embodiments of the present disclosure, the embodiments of the present disclosure further provide an electronic device, the electronic device being a first access point device (AP), and the electronic device including:
a determining module 501, configured to determine a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
a sending module 502, configured to send the first wireless frame.

An embodiment of the present disclosure also provides a power saving information negotiation device, which is applied to a first access point device (AP). The device includes:
a wireless frame determining module, configured to determine a first wireless frame; where the first wireless frame includes identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
a wireless frame sending module, configured to send the first wireless frame.

The device also includes other modules of the electronic device in the aforementioned embodiments, which will not be described in detail here.

In an optional embodiment, the embodiment of the present disclosure further provides an electronic device, as shown in FIG.6, and the electronic device 600 shown in FIG. 6 may be a server, and includes a processor 601 and a memory 603. The processor 601 and the memory 603 are connected with each other, for example, via a bus 602. Optionally, the electronic device 600 may further include a transceiver 604. It should be noted that in actual applications, the number of transceivers 604 is not limited to one, and the structure of the electronic device 600 does not constitute a limitation on the embodiments of the present disclosure.

The processor 601 can be a CPU (Central Processing Unit), a general-purpose processor, a DSP (Digital Signal Processor), an ASIC (Application Specific Integrated Circuit), an FPGA (Field Programmable Gate Array), or other programmable logic device, transistor logic device, hardware component, or any combination thereof. It can implement or execute the various illustrative logic blocks, modules, and circuits described in conjunction with the present disclosure. The processor 601 can also be a combination that implements computing functions, such as a combination of one or more microprocessors, a combination of a DSP and a microprocessor, etc.

The bus 602 may include a path for transmitting information between the above components. The bus 602 may be a PCI (Peripheral Component Interconnect) bus or an EISA (Extended Industry Standard Architecture) bus, for example. The bus 602 may be divided into an address bus, a data bus, a control bus, and so on. For ease of illustration, FIG. 6 shows only a single thick line, but this does not indicate that there is only one bus or only one type of bus.

The memory 603 may be a ROM (Read Only Memory) or other types of static storage devices that can store static information and instructions, a RAM (Random Access Memory) or other types of dynamic storage device that can store information and instructions, or an EEPROM (Electrically Erasable Programmable Read Only Memory), a CD-ROM (Compact Disc Read Only Memory) or other optical disk storages, optical disk storages (including compact discs, laser discs, optical discs, digital versatile discs, Blu-ray discs, etc.), a magnetic disk storage medium or other magnetic storage devices, or any other medium that can be used to carry or store desired program codes in the form of instructions or data structures and can be accessed by a computer, but is not limited thereto.

The memory 603 is configured to store application codes for executing the solution of the present disclosure, and the execution is controlled by the processor 601. The processor 601 is configured to execute the application codes stored in the memory 603 to implement the contents shown in the above method embodiments.

The electronic device includes, but is not limited to, a mobile terminal such as a mobile phone, a laptop computer, a digital broadcast receiver, a PDA (personal digital assistant), a PAD (tablet computer), a PMP (portable multimedia player), and an in-vehicle terminal (e.g., in-vehicle navigation terminal), as well as fixed terminal such as digital TV and a desktop computer. The electronic device shown in FIG. 6 is merely an example and should not limit the functionality or use scope of the embodiments of the present disclosure.

The server provided in the present disclosure may be an independent physical server, or a server cluster or distributed system composed of multiple physical servers. It may also be a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smartphone, tablet computer, notebook computer, desktop computer, smart speaker, smart watch, etc., but is not limited to these. The terminal and the server may be directly or indirectly connected via wired or wireless communication, which is not limited in the present disclosure.

An embodiment of the present disclosure provides a computer-readable storage medium having a computer program stored thereon, and the computer-readable storage medium, when running on a computer, causes the computer to execute the corresponding contents in the aforementioned method embodiments.

It should be understood that although the steps in the flowcharts of the accompanying drawings are shown in sequence as indicated by the arrows, these steps are not necessarily executed in the order indicated by the arrows. Unless otherwise specified herein, there is no strict order restriction on the execution of these steps, and they can be executed in other orders. Moreover, at least some of the steps in the flowcharts of the accompanying drawings may include multiple sub-steps or multiple stages, and these sub-steps or stages are not necessarily executed and completed at the same time, but can be executed at different times, and their execution order is not necessarily sequential, but can be executed in turn or alternately with other steps or at least part of the sub-steps or stages of other steps.

It should be noted that the computer-readable medium described above in the present disclosure may be a computer-readable signal medium or a computer-readable storage medium, or any combination thereof. The computer-readable storage media may include, for example, but is not limited to, electrical, magnetic, optical, electromagnetic, infrared, or semiconductor systems, apparatuses, or devices, or any combination thereof. More specific examples of the computer-readable storage media may include, but are not limited to, an electrical connection having one or more conducting wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that can be used by or in conjunction with an instruction execution system, apparatus, or device. In the present disclosure, the computer-readable signal medium may include a data signal propagated in baseband or as part of a carrier wave, which carries computer-readable program codes. Such a propagated data signal may take a variety of forms, including, but not limited to, an electromagnetic signal, an optical signal, or any suitable combination thereof. The computer-readable signal medium may also be any computer-readable medium other than the computer-readable storage medium that can transmit, propagate, or transport a program for use by or in connection with an instruction execution system, apparatus, or device. The program codes embodied on the computer-readable medium may be transmitted using any suitable medium, including but not limited to a wire, an optical cable, a RF (radio frequency), or any suitable combination thereof.

The computer-readable medium may be included in the electronic device, or may exist independently without being incorporated into the electronic device.

The computer-readable medium carries one or more programs. When the one or more programs are executed by the electronic device, the electronic device is caused to perform the method shown in the above embodiments.

According to an aspect of the present disclosure, a computer program product or computer program is provided, the computer program product or computer program includes computer instructions stored in a computer-readable storage medium. A processor of a computer device reads the computer instructions from the computer-readable storage medium and executes the computer instructions, to cause the computer device to perform the methods provided in the various optional implementations described above.

The computer program codes for performing the operations of the present disclosure may be written in one or more programming languages, or a combination thereof, including object-oriented programming languages such as Java, Smalltalk and C++, and conventional procedural programming languages such as "C" or similar programming languages. The program codes may be executed entirely on the user's computer, partially on the user's computer, as a stand-alone software package, partially on the user's computer and partially on a remote computer, or entirely on a remote computer or server. In cases involving a remote computer, the remote computer may be connected to the user's computer through any type of network, including a local area network (LAN) or a wide area network (WAN), or may be connected to an external computer (e.g., through the Internet from an Internet service provider).

The flowcharts and block diagrams in the accompanying drawings illustrate architecture, functions and operations of the possible implementations of the systems, methods and computer program products according to various embodiments of the present disclosure. In this regard, each box in the flowcharts or block diagrams can represent a module, a program segment, or a part of codes, and the module, program segment, or part of codes contains one or more executable instructions for realizing the specified logical function. It should also be noted that in some alternative implementations, the functions marked in the boxes can also occur in a different order than that marked in the accompanying drawings. For example, two boxes represented in succession can actually be executed substantially in parallel, and they can sometimes be executed in the opposite order, depending on the functions involved. It should also be noted that each box in the block diagrams and/or flowcharts, and the combination of the boxes in the block diagrams and/or flowcharts, can be implemented using a dedicated hardware-based system that performs the specified functions or operations, or can be implemented using a combination of dedicated hardware and computer instructions.

The modules involved in the embodiments of the present disclosure may be implemented in software or hardware. In some cases, the name of a module does not constitute a definition on the module itself. For example, module A may also be described as " module A for performing operation B. "

Those described above are merely illustrations of preferred embodiments of the present disclosure and the technical principles employed. Those skilled in the art should understand that the scope of the present disclosure is not limited to technical solutions from specific combinations of the aforementioned technical features, and it also encompasses other technical solutions obtained by any combination of the aforementioned technical features or their equivalents, without departing from the scope of the above-disclosed ideas. For example, a technical solution formed by replacing the aforementioned features with (but not limited to) technical features with similar functions disclosed in this disclosure.

## Claims

1. A communication method, applied to a station (STA), the method comprising:
establishing a second link with a second AP through a first AP, wherein each second link is in an inactive state; and
wherein the STA establishes a first link with the first AP, the first link is in an activated state, and the first AP and the second AP belong to different physical entities.

2. The communication method according to claim 1, wherein the establishing the second link with the second AP through the first AP comprises:
receiving a first wireless frame sent by the first AP; wherein the first wireless frame comprises identification information of the second AP.

3. The communication method according to claim 2, wherein the first wireless frame comprises a first information element, and the identification information is carried in the first information element.

4. The communication method according to claim 2 or 3, wherein the second AP does not support multi-link communication, and the identification information comprises MAC address information of the second AP or device identification information allocated by the first AP to the second AP;
or,
the second AP is affiliated with an AP MLD, and the identification information comprises group identification information of a group to which the second AP belongs, and device identification information of the second AP in the group.

5. The communication method according to claim 4, wherein the group identification information of the second AP comprises MAC address information of the AP MLD to which the second AP belongs.

6. The communication method according to claim 1, wherein a TID-to-Link mapping for the second link is established through the first AP.

7. The communication method according to claim 3, wherein the first information element further comprises:
transition delay information for the STA transitioning from the first AP to the second AP.

8. The communication method according to claim 2, wherein after receiving the first wireless frame sent by the first AP, the method further comprises:
sending a second wireless frame, wherein the second wireless frame requests transition from the first AP to the second AP.

9. The communication method according to claim 8, wherein after sending the second wireless frame, the method further comprises:
upon receiving an acknowledgement frame fed back by the second AP with respect to the second wireless frame, transitioning from the first AP to the second AP.

10. The communication method according to claim 8 or 9, wherein the second wireless frame comprises a transition notification frame.

11. A communication method, applied to a first access point device (AP), the method comprising:
determining a first wireless frame; wherein the first wireless frame comprises identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
sending the first wireless frame.

12. The communication method according to claim 11, wherein the first wireless frame comprises a first information element, and the identification information is carried in the first information element.

13. The communication method according to claim 11 or 12, wherein the second AP does not support multi-link communication, and the identification information comprises MAC address information of the second AP or device identification information allocated by the first AP to the second AP;
or
the second AP is affiliated with an AP MLD, and the identification information comprises group identification information of a group to which the second AP belongs, and device identification information of the second AP in the group.

14. The communication method according to claim 13, wherein the group identification information of the second AP comprises MAC address information of the AP MLD to which the second AP belongs.

15. The communication method according to claim 11, wherein a TID-to-Link mapping for the second link is established through the first AP.

16. The communication method according to claim 12, wherein the first information element further comprises:
transition delay information for the STA transitioning from the first AP to the second AP.

17. An electronic device, the electronic device being a station (STA), wherein the electronic device comprises:
a link establishing module, configured to establish a second link with a second AP through a first AP, wherein each second link is in an inactive state; and
wherein the STA establishes a first link with the first AP, the first link is in an activated state, and the first AP and the second AP belong to different physical entities.

18. An electronic device, the electronic device being a first access point device (AP), wherein the electronic device comprises:
a determining module, configured to determine a first wireless frame; wherein the first wireless frame comprises identification information of the second AP, the identification information indicates a station (STA) to establish a second link with the second AP through the first AP in a case where the STA establishes a first link with the first AP, each second link is in an inactive state, the first link is in an activated state; and the first AP and the second AP belong to different physical entities; and
a sending module, configured to send the first wireless frame.

19. An electronic device, comprising a memory, a processor, and a computer program stored in the memory and executable on the processor, wherein the processor, when executing the program, implements the method according to any one of claims 1 to 10 or the method according to any one of claims 11 to 16.

20. A computer-readable storage medium, wherein a computer program is stored on the computer-readable storage medium, and the computer program, when being executed by a processor, implements the method according to any one of claims 1 to 10 or the method according to any one of claims 11 to 16.
